# EUROPÄISCHE PATENTSCHRIFT

(11) **EP 1 803 878 B1**
(45) Veröffentlichungstag und Bekanntmachung des Hinweises auf die Patenterteilung: **26.09.2012**
(21) Anmeldenummer: 06026132.8
(22) Anmeldetag: 16.12.2006
(51) Int. Cl.: E05B 51/02, B64C 1/18, E05C 5/02

(54) **Dekompressionsverschluss**
Decompression closure
Fermeture de décompression

(30) Priorität: 27.12.2005 DE 202005020308 U
(43) Veröffentlichungstag der Anmeldung: 04.07.2007
(73) Patentinhaber: S-Fasteners GmbH, 75382 Althengstett (DE)
(72) Erfinder: Homner, Bernhard, 75365 Calw-Stammheim (DE)
(74) Vertreter: Blutke, Klaus Wilhelm

(56) Entgegenhaltungen:
- EP-A1- 0 784 141
- DE-A1- 10 040 410
- DE-C1- 3 922 025

## Beschreibung

Sogenannte Dekompressionsverschlüsse werden benötigt, um bei einem plötzlichen Druckanstieg in einem von 2 Bereichen einen schnellen Druckausgleich zu ermöglichen.

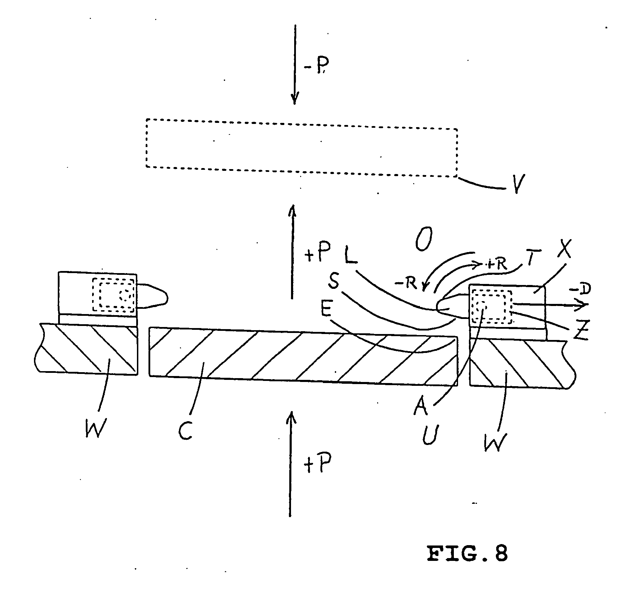

Die Funktion eines Dekompressionaverschlusses wird an folgendem Beispiel (FIG.8) erläutert:

Zwei Bereiche (ein oberer Bereich O und ein unterer Bereich U) sind durch eine Wand W voneinander abgedichtet getrennt. In der Wand W ist lösbar eine Durchlaßöffnungs-Verschlußplatte C (hatch cover) abgedichtet angeordnet.

In beiden Bereichen O und U herrscht üblicherweise der gleiche Druck; tritt jetzt im unteren Bereich U eine Druckerhöhung auf, wird ( bei Erreichung eines bestimmten Druckwertes) die Durchlaßöffnungs-Verschlußplatte C in Richtung +P in den oberen Bereich O "geschleudert" (gedrückt), so daß durch die dann nicht mehr verschlossene Durchlaßöffnung ein schneller Druckausgleich erfolgen kann.

Die Durchlaßöffnungs-Verschlußplatte wird randwärts jeweils von einem Schwenkverschluß-Riegel L gehalten, der auf einem Lagerschlitten Z des Dekompressionsverschlusses X angeordnet ist. Die Dekomprossionverschlüsse X sind an den Rändern der Durchlaßöffnung an der Wand befestigt.

Wenn die Durchlaßöffnungs-Verschlußplatte C durch den Druckanstieg im unteren Bereich U in Richtung +P gegen den Schwenkverschluß-Riegel L drückt, löst sich eine diesen Riegel haltende Blattfeder (nicht dargestellt) aus einer Rastposition, und der Schwenkverschluß-Riegel L schwenkt in Richtung +R um die Achse A. Dabei drückt die obere Kante E der Durchlaßöffnungs-Verschlußplatte C gegen die Schräge S des Schwenkverschluß-Riegels L und verschiebt dabei den Lagerschlitten Z des Dekompressionsverschlusses X vorübergehend seitwärts in Richtung -D gegen die Kraft einer Spiral-Feder (nicht dargestellt).

Dadurch ist der Weg für die Durchlaßöffnungs-Verschlußplatte C in den oberen Bereich O freigegeben.

Die gelöste Durchlaßöffnungs-Verschlußplatte C (gestrichelte Darstellung) kann dadurch wieder in eine die Durchlaßöffnung verschließende Position gebracht werden, indem sie mit ihrer unteren Kante V auf die obere Gleitschräge T des Schwenkverschluß-Riegels L gedrückt wird.

Dabei schwenkt der Schwenkverschluß-Riegel in Richtung entgegengesetzt zu -R , bis die Blattfeder wieder in die ihn haltende Rastposition gelangt ist. Dieser Vorgang erfolgt unter vorübergehendem Ausweichen des Lagerschlittens seitwärts in Richtung -D (gegen die Kraft der Spiralfeder).

Sobald die Durchlaßöffnungs-Verschlußplatte in eine die Durchlaßöffnung verschließende Position gelangt ist, drückt die Spiralfeder den Lagerschlitten in eine Richtung entgegengesetzt zu -D zurück, wobei das äußere Ende des Schwenkverschluß-Riegels L über der Durchlaßöffnungsverschluß-Platte wieder eine Verschlußposition einnimmt.

Diese Funktionsweise des Dekompressionsverschlusses bezieht sich sowohl auf den nachfolgend erwähnten Dekomprossionsverschluß nach dem Stand der Technik gemäß EP 0784141 als auch auf den erfindungsgemäßen Dekompressionsverschluß.

In der Europäischen Patentanmeldung EP 0784 141 A1 ist ein Doppel-Kompressionsverschluß mit einer Blattfeder beschrieben. Die Blattfeder weist zwei winklig gebogene Schenkel auf, von denen der eine Schenkel den Schwenkverschluß-Riegel federnd beaufschlagt und und in einer Rastkerbe des Schwenkverschluß-Riegels lösbar eingreift und von von denen der andere Schenkel der Fixierung der Blattfeder im Lagerschlitten dient und in diesem verschiebe- und abhebesicher angeordnet ist.

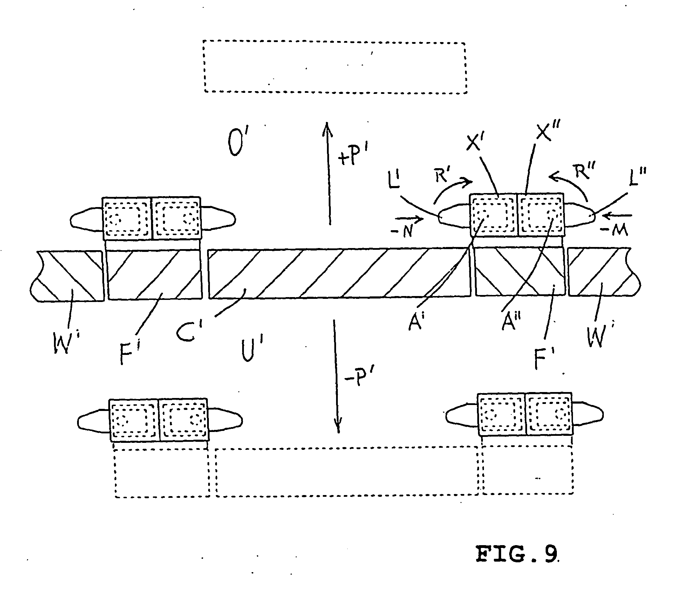

Bei entsprechender Kombination zweier entgegengesetzt wirkender Dekompressionsverschlüsse (s. FIG.9) zu einer Baueinheit - der Lagerschlitten des einen Dekompressionsverschlusses X' läßt sich seitwärts in Richtung -M, der Lagerschlitten des anderen Dekompressionsverschlusses X" läßt sich entgegengesetzt dazu in Richtung -N verschieben) - läßt sich erreichen ,
daß die Durchlaßöffnungs-Verschlußplatte C' bei Druckanstieg im unteren Bereich U' in den oberen Bereich O' in Richtung +P' "geschleudert" (gedrückt) wird oder
daß die Durchlaßöffnungs-Verschlußplatte C' bei Druckanstieg im oberen Bereich O' in den unteren Bereich U' in Richtung -P' "geschleudert" wird, damit ein Druckausgleich erfolgen kann.

Zu diesem Zweck sind die kombinierten Dekompressionsverschlüsse auf einem (Dichtungs-)Rahmen F' befestigt, welcher randwärts in der Durchlaßöffnung angeordnet ist. Der "äußere" Schwenkverschluß-Riegel L" des einen Dekompressionsverschlusses X" ragt auf die Wand (W')-Oberseite; der "innere" Schwenkverschluß-Riegel L' des anderen Dekompressionsverschlusses X' ragt auf die Durchlaßöffnungs-Verschlußplatten (C')-Oberseite.

Bei Druckanstieg im unteren Bereich U' öffnen die inneren Riegel L' und der Durchlaßöffnungs-Deckel C' wird in den oberen Bereich O'"geschleudert" (gedrückt).

Bei Druckanstieg im oberen Bereich O' öffnen die aüßeren Riegel L" und der Durchlaßöffnungs-Deckel C' samt Rahmen F' wird in den unteren Bereich U' (gedrückt).

Aus der Europäischen Patentschrift EP 0784 141 ist ein

Dekompressionsverschluß mit einem längsverschieblichen Lagerschlitten bekannt, auf welchem ein Verschlußriegel drehbar angeordnet ist: Lagerschlitten und Verschlußriegel sind von einer beide Teile in Schließstellung zwingenden Druckfeder beaufschlagt.

Dabei ist die Druckfeder in einer Wanne unterhalb des Lagerschlittens in einer Grundplatte angeordnet. Am Lagerschlitten ist eine Rastfeder befestigt. Ihr äußeres Ende hält den Verschlußriegel in Schließstellung, ihr inneres Ende ist derart in die Wanne an das Ende der Druckfeder geführt, daß sie die Verbindung zwischen Druckfeder und Lagerschlitten herstellt.

In dieser Europäischen Patentschrift EP 0784 141 ist auch eine Dekompressions-Verschlußbaueinheit beschrieben, welche bei Überschreiten eines vorbestimmten Druckes öffnet und welche zwei Dekompressionsverschlüsse umfaßt, die nebeneinander in versetzt entgegengerichtete Richtungen wirkend auf einem Basisteil angeordnet sind.

In der deutschen Offenlegungssehrift DE 100 40 410 A1 ist ein Dekomprossionsverschluß mit zweigeteiltem Verschiebeelement beschrieben. Der Dekompressionaverschluß besteht aus einem Support mit Führungsbahn zur Aufnahme eines Verschiebelementes mit einer achnengelagerten schwenkbaren Verschlußnase.

Eine auf die Verschlußnase wirkende Blattfeder ist im Verschiebeelement achsengelagert. In der Führungsbahn wirkt zwischen dem Support und dem Verschiebeelement eine Druckfeder. Das Verschiebeelemenet ist zweigeteilt, wobei z.B. das erste Teil die Achsen für die Verschlußnane und die Blattfeder umfaßt und das zweite Teil Aussparungen zur Aufnahme dieser der Enden dieser Achsen aufweist.

In der deutschen Patentschrift DE 3922025 C1 ist eine Vorrichtung für tragende Strukturen von Luft- und Raumfahrzeugen beschrieben. Sie umfaßt wenigstens ein Dekompressionspanel, das mittels eines einen Anlageflansch aufweisenden Rahmens und wenigstens einer Halteeinrichtung in Räumen mit einer trennenden Zwischenwand des Fahrzeugs montiert ist. Hierbei ist das Panel bei Erreichen von vorbestimmten Auslösedruckverhältnissen zwischen seiner Innen- und Außenseite aus der Zwischenwand herausdrückbar. Jede Halteeinrichtung ist als Auslöseverschluß ausgebildet, der mit einer Grundplatte auf dem Rahmen an der dem Flansch gegenüberliegenden Seite befestigt ist und die jeweils über wenigstens einen Verschlußhebel an die Zwischenwand und am Panel angreift, wobei jeder Verschliußhebel schwenkbar an derselben Drehachse an der Grundplatte befestigt und in seiner Haltestellung durch einen Scherstift gehalten ist.

Es ist Aufgabe der Erfindung, eine verbesserte Baueinheit mit zwei nebeneinanderliegenden entgegengesetzt wirkenden Dekompressionaverschlüssen vorzusehen.

Diese Aufgabe wird durch die im Anspruch 1 angegebenen kennzeichnenden Merkmale gelöst.

Vorteilhafte Weiterbildungen sind in den Unteransprüchen gekennzeichnet.

Die Verbesserungen beziehen sich auf eine Gewichtsreduzierung, Montagevereinfachung und eine geringere Anzahl von Einzelteilen.

Ausführungsbeispiele der Erfindung sind in den Zeichnungen dargestellt und werden im folgenden näher beschrieben.

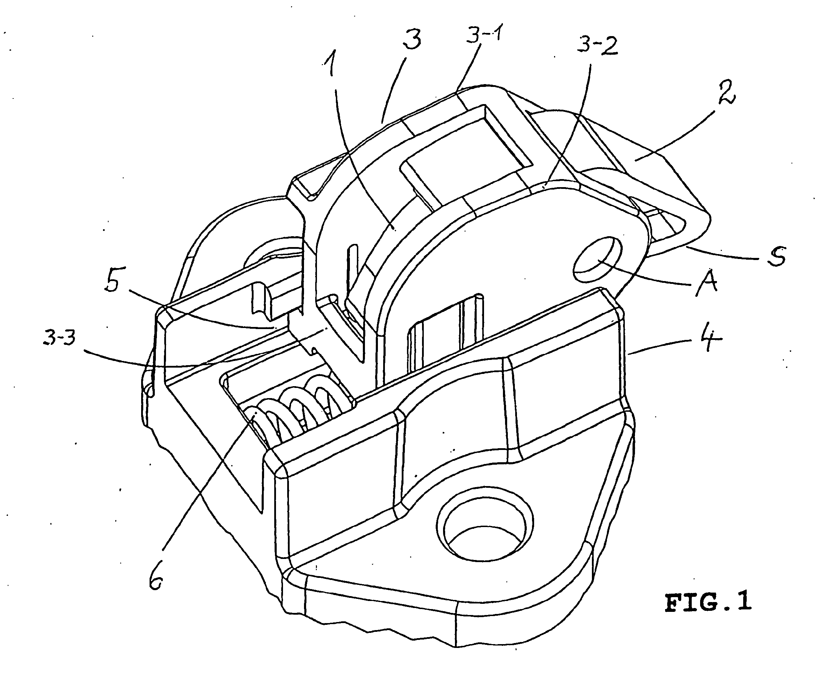

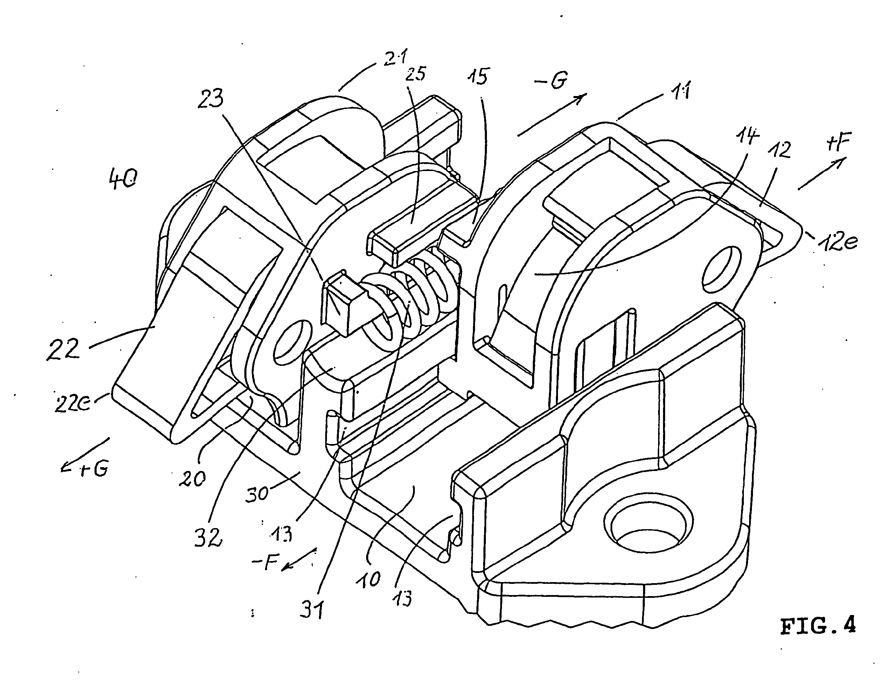

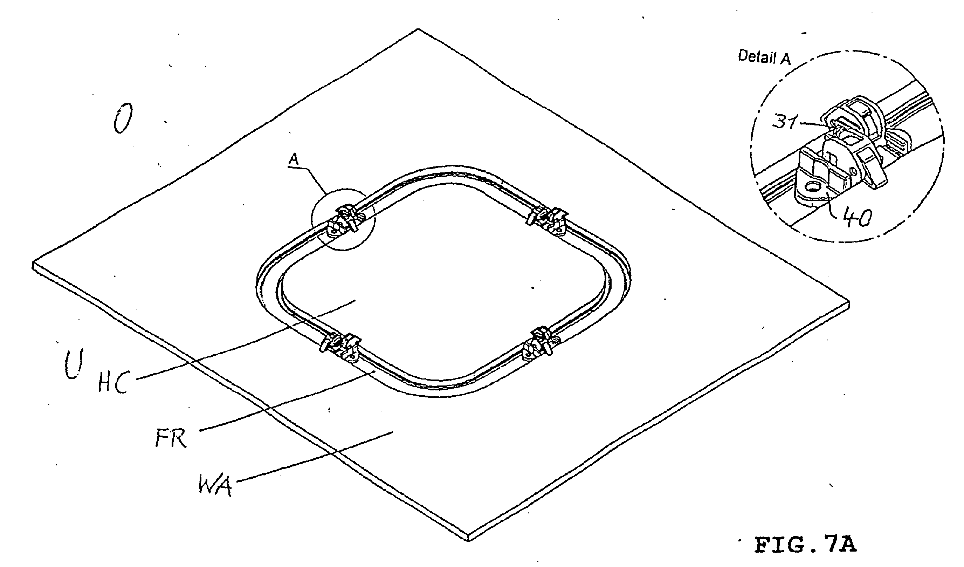

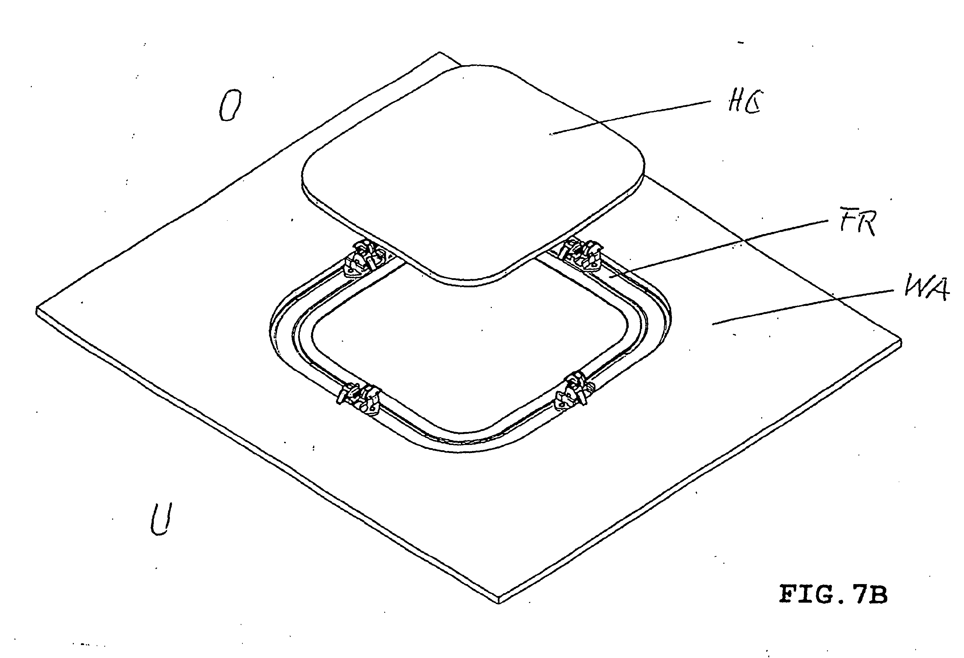

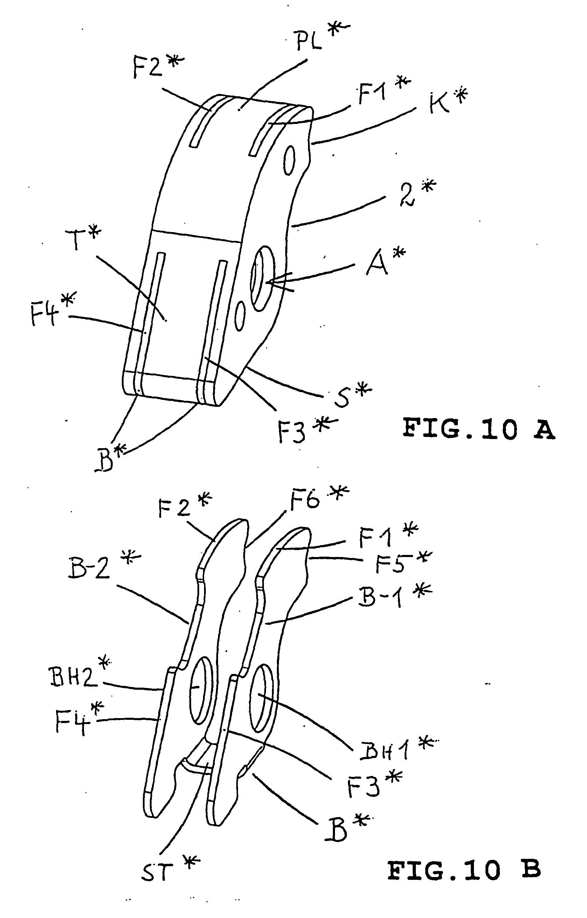

Es zeigen:
FIG. 1
   eine perspektivische Darstellung eines Einzel-Dekompressionsverschlusses;
FIG. 2
   eine Schnittdarstellung des Einzel-Dekompressionsverschlusses gemäß FIG.1;
FIG.3A, FIG. 3B
   perspektivische Einzelteildarstellungen in zwei verschiedenen Blickrichtungen von einem Lagerschlitten in zweigeteilter Bauweise für den erfindungsgemäßen Dekompressionsverschluß;
FIG.4
   eine perspektivische Darstellung einer erfindungsgemäßen Baueinheit mit zwei nebeneinanderliegenden entgegengesetzt wirkenden Dekompressionsverschlüssen;
FIG.5
   eine perspektivische Darstellung einer erfindungsgemäßen Baueinheit für zwei nebeneinanderliegende entgegengesetzt wirkende Dekompressionsverschlüsse, von denen nur einer dargestellt ist;
FIG.6
   eine perspektivische Einzelteildarstellung der erfindungsgemäßen Baueinheit gemä8 FIG. 4 mit zwei nebeneinanderliegenden entgegengesetzt wirkenden Dekompressionsverschlüssen;
FIG. 7A
   eine perspektivische Darstellung eines in einer Wandungsöffnung angeordneten Durchlaßöffnungs-Deckels mit einem Rahmen, auf dem erfindungsgemäße Baueinheiten für zwei nebeneinanderliegende entgegengesetzt wirkende Dekompressionsverschlüsse gemäß FIG. 4 angeordnet sind;
FIG. 7B
   eine perspektivische Darstellung des in den oberen Bereich katapultierten Durchlaßöffnungs-Dockels mit Bezug auf FIG. 7A;
FIG.7C
   eine perspektivische Darstellung des in den unteren Bereich mit Rahmen katapultierten Durchlaßöffnungs-Deckels mit Bezug auf FIG. 7B;
FIG. 8
   eine schematische Schnittdarstellung eines in einer Wandungsöffnung angeordneten Durchlaßöffnungs-Dockels mit Einzel-Dekompressions-Verschlüssen zur Erklärung der Wirkungsweise nach dem Stand der Technik;
FIG.9
   eine schematische Schnittdarstellung eines in einer Wandungsöffnung mit Rahmen angeordneten Durchlaßöffnungs-Deckels zur Erklärung der Wirkungsweise nach dem Stand der Technik, wobei auf dem Rahmen Baueinheiten mit mit zwei nebeneinanderliegenden entgegengesetzt wirkenden Dekompressionsverschlüssen angeordnet sind.
FIG. 10A
   eine perspektivische Darstellung eines Schenkverschluß-Riegels, bestehend aus einem mit Kunststoff umspritzten Metallskeletts.
FIG. 10B
   eine perspektivische Darstellung des Metallskeletts des Schwenkverschluß-Riegels gemäß FIG. 10A
FIG. 1 zeigt
   eine perspektivische Darstellung eines Einzel-Dekompressionsverschlusses;
FIG. 2
   eine Schnittdarstellung dieses Dekompressionsverschlusses.

Dieser Dekompressionsverschluß umfaßt einen Lagerschlitten 3 und ein Basisteil 4.

Der Lagerschlitten 3 ist in geradgeführten Nuten 5 ( in FIG. 1 ist nur eine dieser Nuten erkennbar) des Basisteils 4 hin- und herbeweglich.

Der Lagerschlitten 3 besteht im wesentlichen aus zwei Seitenwänden 3-1 und 3-2 und einer diese in seinem unteren Bereich Teil verbindende Querplatte 3-3; auf ihm sind der Schwenkverschluß-Riegel 2 und die Blatt-Feder 1 angeordnet. Der Schwenkverschluß-Riegel 2 ist auf einer zwischen den Seitenwänden 3-1 und 3-2 angeordneten Achse A drehbar gelagert. Das nach außen weisende Ende des Schwenkverschluß-Riegels 2 hat eine Gleitschräge S, auf der - wie im Zusammenhang mit FIG.8 erläutert- beim Öffnungsvorgang die Kante E der Durchlaßöffnungs-Verschlußplatte entlanggleitet, dabei eine Kraft ausübt und eine Schwenkung und Verschiebung des Lagerschlittens bewirkt.

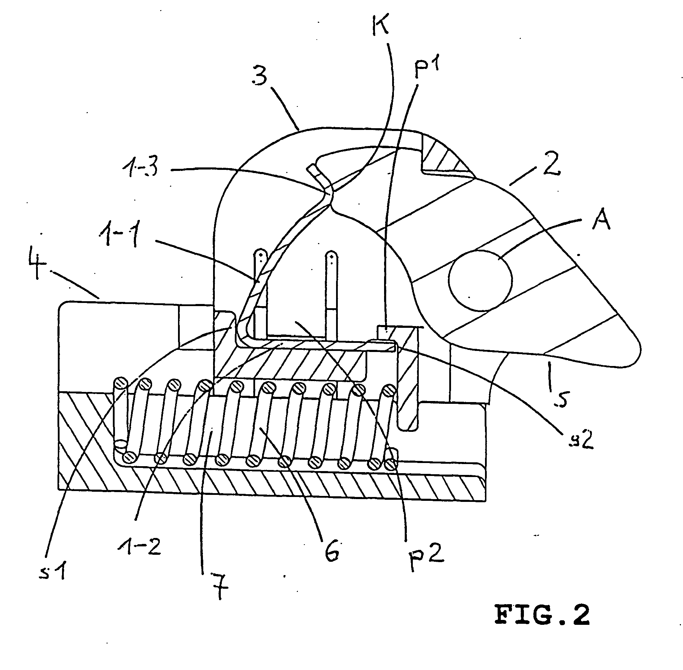

Am anderen Ende des Schwenkverschluß-Riegels (s. auch FIG.2) ist eine Kerbe K vorgesehen. In diese Kerbe K greift (rastet) in Verschlußstellung des Schwenkverschluß-Riegels 2 das Ende 1-3 der zweischenklig gebogenen Blattfeder 1 ein.

Es ist Aufgabe der Rastfeder, durch Einrasten ihres Endes in die Kerbe des Schwenkverschluß-Riegels diesen in Schließstellung zu halten. Diese Rastverbindung ist lösbar. Der eine Schenkel 1-1 der Blattfeder 1 beaufschlagt federnd den Schwenkverschluß-Riegel 2; der andere Schenkel 1-2 dient ausschließlich der Fixierung der Blattfeder 1 im Lagerschlitten 3; er ist in diesem verschiebe- und abhebesicher angeordnet.

Es ist Aufgabe der Blattfeder 1, durch Eingriff ihres Endes 1-3 in die Kerbe K des Schwenkverschluß-Riegels 2 diesen in Schließstellung zu halten.

Im Basisteil 4 ist in einer Aussparung 7 im Basisteil 4 unterhalb des Lagerschlittens 3 eine Spiral-Druckfeder 6 angeordnet.

Es ist Aufgabe dieser Druckfeder 6, den Lagerschlitten 3 in die äußere Schließstellung (in Richtung -D gefäß FIG. 8) zu drücken.

Nachfolgend wird unter Einbeziehung von FIG.8 die Wirkungsweise dieses Dekompressionsverschlusses beschrieben:

In Schließstellung ragt das Ende des Schwenkverschluß-Riegels 2 über den Rand der Durchlaßöffnungs-Verschlußplatte. Bei Ansteigen des Druckes im unteren Bereich U über einen bestimmten Wert weicht die Durchlaßöffnungs-Verschlußplatte C in Richtung +P nach oben aus; dabei drückt ihre obere Kante E gegen die Gleitschräge S des Schwenkverschluß-Riegels 2. Dieser führt dabei eine Schwenkbewegung um seine Achse A in Richtung +R aus, wobei die Blattfeder 1 aus der Kerbe K ausrastet.

Der Druck der Kante E auf die Gleitschräge S bewirkt, daß sich nunmehr der Lagerschlitten 3 gegen den Druck der Spiralfeder 6 in Richtung -D verschiebt. Hierdurch wird das zuvor noch über die Durchlaßöffnungs-Verschlußplatte C ragende äußere Ende des Schwenkverschluß-Riegels 2 zurückgezogen und der Weg ist frei: Die Durchlaßöffnungs-Verschlußplatte C kann nun ungehindert in den oberen Bereich O ausweichen. Der Druckausgleich zwischen dem unteren U und dem oberen Bereich O kann nun schnell -über die nicht mehr verschlossene Durchlaßöffnung -erfolgen.

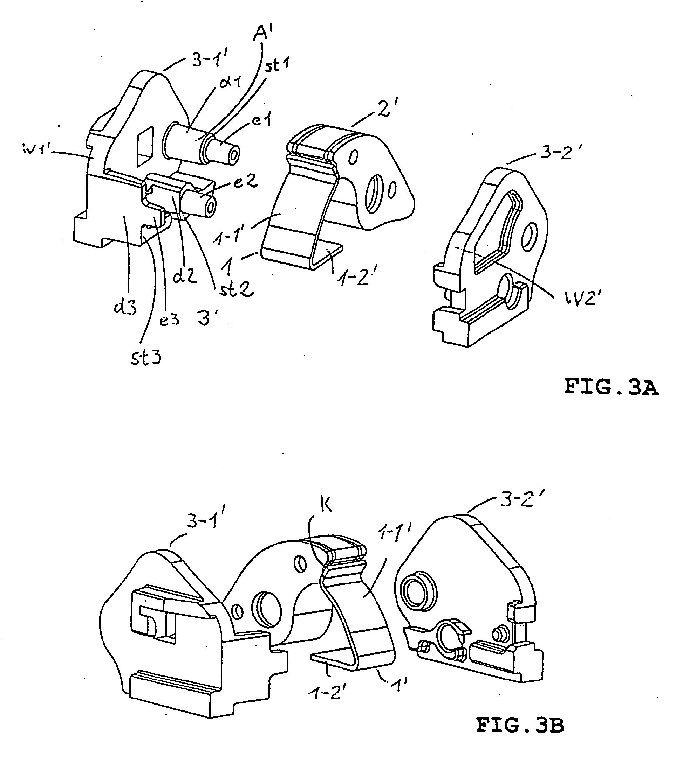

Die FIG. 3A und FIG. 3B zeigen perspektivische Einzelteildarstellungen in zwei verschiedenen Blickrichtungen von einem Lagerschlitten 3' in zweigeteilter Bauweise für den erfindungsgemäßen Dekompressionsverschluss. Beide Lagerschlittenteile 3-1', 3-2' umfassen jeweils eine Wand des Lagerschlittens 3'.

Von dem Lagerschlittentell 3-1' gehen Abstandselemente d1, d2 und d3 für die Verbindung beider Lagerschlittenteile aus.

Um beide Lagerschlittenteile verdrehfest miteinander verbinden zu können, sind die freien Enden e1, e2 und 23 dieser Abstandselemente in Ausparungen der Wand des Lagerschlittenteils 3-2' angeordnet.
Diese freien Enden der Abstandselemente weisen zum übrigen Teil der Abstandselemente einen Absatz st1, st2, st3 auf,
welcher im zusammengebauten Lagerschlitten an der Innenwand des Lagerschlittenteils 3-2' anliegt.
Das Abstandselement d1 bildet zugleich die Achse für den Schwenkverschluß- Riegel 2'.

FIG.4 zeigt
eine perspektivische Darstellung einer erfindungsgemäßen Baueinheit 40 mit zwei nebeneinanderliegenden entgegengesetzt wirkenden Dekompressionsverschlüssen 10 und 20.

FIG. 5 zeigt
eine perspektivische Darstellung dieser Baueinheit, bei der aus Übersichtsgründen einer der Dekompressionsverschlüsse nicht mit dargestellt ist.
Diese Darstellung dient als Ergänzung zu FIG. 4. Dieselben Teile tragen dieselben Bezugszeichen.

Die beiden Dekompressions-Verschlüsse 10 und 20 (welche in ihrer Bauart mit einer Ausnahme dem Einzelkompressionsverschluß gemäß FIG.1 entsprechen) sind nebeneinander - in versetzt entgegengerichteter Richtung +F und +G wirkend - auf einem gemeinsamen Basisteil 30 angeordnet. Die Ausnahme besteht darin, daß beide Dekompressions-Verschlüsse 10 und 20 eine gemeinsame Feder 31 für die Verschiebung ihrer Lagerschlitten 11 und 21 aufweisen.
Das äußere Ende 12e des Schwenkverschluß-Riegels 12 des einen Dekompressions-Verschlusses 10 und das äußere Ende 22e des Schwenkverschluß-Riegels 22 des anderen Dekompressions-Verschlusses 20 weisen in versetzt entgegengerichtete Richtungen +F und +G.

Die Lagerschlittenführungen beider Dekompressionsverschlüsse verlaufen parallel zueinander. Die Nutenführungen für den Dekompressionsverschluß 10 sind mit 13 gekennzeichnet.

Zwischen den Lagerschlitten 11 und 21 der beiden Dekompressionsverschlüsse 10 und 20 ist eine beide Lagerschlitten in Verschieberichtung +F und +G beaufschlagende gemeinsame Spiraldruckfeder 31 angeordnet.

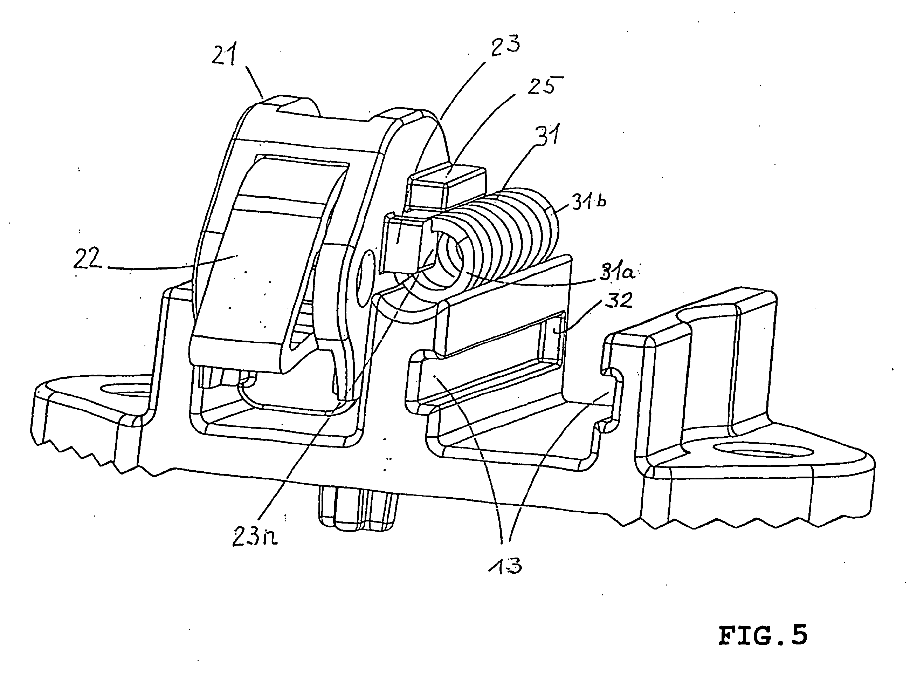

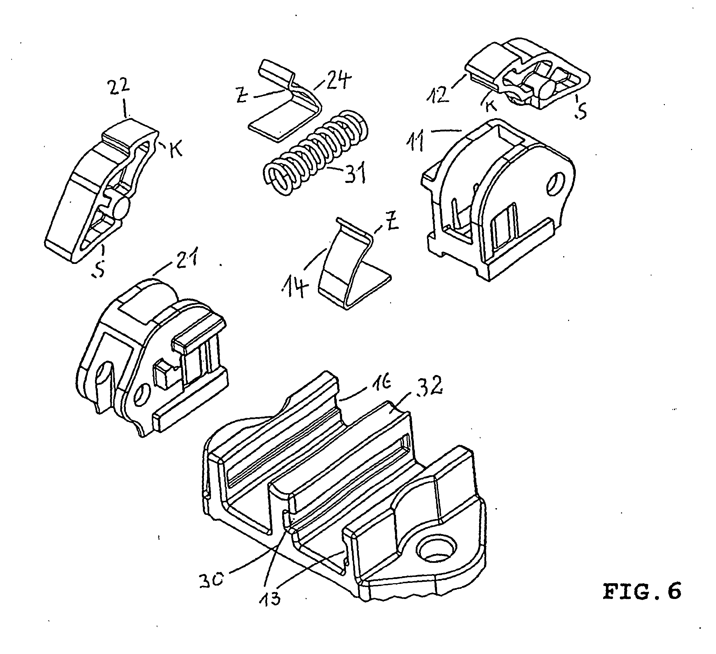

Der Lagerschlitten 11 wird durch diese Feder 31 in Richtung +F, der Lagerschlitten 21 in Richtung +G in eine Endposition gedrückt. Die Endposition des Lagerschlittens 11 ist durch den Anschlag 32 definiert (FIG.5).
In der Endposition ist der Schwenkverschluß-Riegel 12 bzw. 21 in Verschlußposition, wenn die ihm entsprechende Blattfeder 14 bzw. 24 in seine Haltekerbe K eingreift (s. auch FIG. 6). Beim Öffnen des Dekompressionsverschlusses der Lagerschlitten 11 gegen die Kraft der Feder 31 in Richtung -F verschoben und der Lagerschlitten 21 des Dekompressionsverschlusses 20 gegen die Kraft der Feder 31 in Richtung -G.

Zwischen den einander zugewandten Seiten der Lagerschlitten 11 und 21 ist die beiden Dekompressionsverschlüssen 10 und 20 gemeinsame Spiralfeder 31 angeordnet.
Für ihr vorderes Ende 31a und ihr hinteres Ende 31b ist jeweils ein Anschlag vorgesehen.
Der Anschlag für das vordere Ende 31a ist als Vorsprung 23 an der Seite des Lagerschlittens 21 ausgebildet;
der Anschlag für ihr hinteres Ende 31b (in FIG. 4,5 und 6 nicht erkennbar) ist entsprechend als Vorsprung an der Seite des Lagerschlittens 11 ausgebildet.
Die gedachte Achse der Druckfeder verläuft parallel zur Verschieberichtung der Lagerschlitten 11 und 21.

Ein seitliches Ausweichen der Spiralfeder wird verhindert durch
a) von ins Innere der Federenden reichende von den Anschlägen 23 etc. ausgehende Nasen und/oder
b) durch an den sich gegenüberstehenden Lagerschlittenseiten angeordnete Vorsprünge 15, 25 und/oder
c) durch ein zwischen den Lagerschlitten angeordnetes FederBett 32.

Der Einzel-Dekomprosionsverschluß eignet sich für das Öffnen einer Durchlaßöffnung-Verschlußplatte in nur einer Richtung , welche auch mit Scharnieren befestigt sein kann.

Die erfindungsgemäße Baueinheit mit zwei nebeneinanderliegenden entgegengesetzt wirkenden Dekompreessionsverschlüssen hingegen eignet sich zum Verschließen einer Durchlaßöffnungs-Verschlußplatte, welche sich in zwei entgegengesetzten Richtungen öffnen soll. (Hierbei sind keine Scharniere erforderlich). Eine solche Anwendung unter Verwendung eines (Dichtungs-)Rahmens ist nach dem Stand der Technik ( EP 0784141) bereits bekannt.

Dekompressionsverschlüsse werden überall dort eingesetzt, wo ein schneller Ausgleich von unterschiedlichen Drucken in zwei voneinander getrennten Bereichen erforderlich ist, insbesondere im Flugzeugbau.

Da im Flugzeugbau sehr hohe Anforderungen an die Hitzebeständigkeit von Teilen gestellt werden, sind diesbezügliche Dekompressionsverschlüsse aus Metall, vorzugsweise aus Aluminium (Druckguß) hergestellt, ausgenommen die Federn, für die ohnehin Federstahl verwendet wird.

Für solche Dekompressionsverschlüsse ist eine zweiteilig Bauweise besonders vorteilhaft, da sie eine sehr vorteilhafte Montage bedingt.

Bei nicht allzu hohen Anforderungen an Hitzebeständigkeit können die Dekompressionsverschlüsse auch aus Kunststoff hergestellt werden. Das Kunststoffmaterial gestattet es, insbesondere bei einer einteiligen Bauweise, zur Fixierung der Halte-Blattfeder in den Kunststoff-Seitenwänden des Lagerschlittens Federnasen (p2 in FIG. 2) auszubilden, d.h. federnde Vorsprünge, durch die die Halte-Blattfeder in ihrer Lage fixiert werden können.

FIG.6 zeigt
eine perspektivische Einzelteildarstellung der erfindungsgemäßen Baueinheit gemäß FIG. 4 mit zwei nebeneinanderliegenden entgegengesetzt wirkenden Dekompressionsverschlüssen. Die Einzelteile tragen die gleichen Bezugszeichen wie in den FIG. 4 und 5.

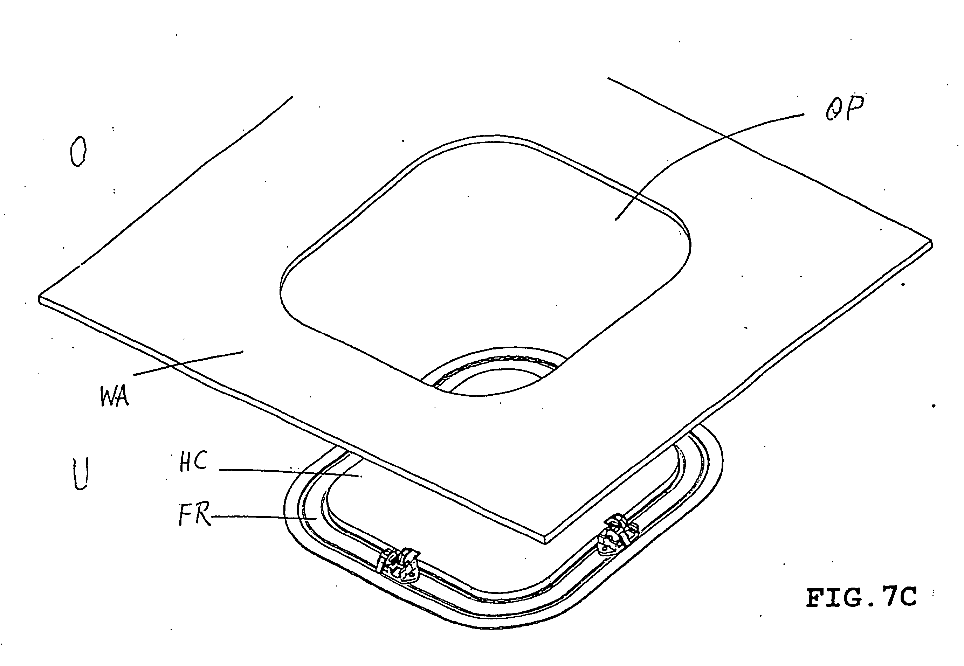

FIG. 7A zeigt
eine perspektivische Darstellung eines in einer Öffnung OP (FIG.7C) einer Wandung WA angeordneten Durchlaßöffnungs-Deckels HC mit einem (Dichtungs-)Rahmen FR, auf dem erfindungsgemäße Baueinheiten für zwei nebeneinanderliegende entgegengesetzt wirkende Dekompressionsverschlüsse gemäß FIG. 4 angeordnet sind.

FIG. 7B zeigt
eine perspektivische Darstellung des in den oberen Bereich O gedrückten Durchlaßöffnungs-Dockels HC.

FIG.7C zeigt
eine perspektivische Darstellung des in den unteren Bereich U mit Rahmen FR gedrückten Durchlaßöffnungs-Deckels HC.

Die FIG. 7A, 7B und 7C dienen dazu, die schematische Schnittdarstellung in FIG. 9 zur Wirkungsweise der Baugruppe mit zwei nebeneinanderliegenden in entgegengesetzte Richtungen wirkenden Dekompressionsverschlüssen anschaulich durch eine perspektivische Darstellung zu ergänzen. In den FIG. 7A, 7B und 7C sind erfindungsgemäße Dekompressionsverschlüsse ( zu erkennen an der gemeinsamen Feder 31 zwischen den beiden Lagerschlitten ( Detail A in FIG. 7A)).

FIG. 10A zeigt
eine perspektivische Darstellung eines Schwenkverschluß-Riegels 2*, bestehend aus einem mit Kunststoff PL* umspritzten Metallskelett B*.

FIG. 10B zeigt
eine perspektivische Darstellung dieses Metallskeletts B*.

Das Metallskelett ist hitzebeständiger als der Kunststoff. Das Metallskelett B* ist derart ausgebildet, daß es nach hitzebedingter Zerstörung des Kunststoffs - z.B. als Folge eines Brandes- die Funktion des Schwenkverschluß-Riegels aufrechterhält bezüglich seiner Schwenkbarkeit um die Achse A*, der Kraftbeaufschlagbarkeit der Gleitschrägen S*, T* und der Blattfeder-bezogenen Rastposition K*.

Das Metallskelett B* umfaßt zwei parallel zueinander angeordnete ebene Wandelemenete B-1*, B-2*, welche durch einen Steg ST* miteinander verbunden sind, und welche aufeinander ausgerichtete Bohrungen BH1*, BH2* zur Aufnahme der Schwenkachse A* aufweisen. Die Randflächen F1*, F2*, F3*, F4*; F5*, F6* der Wandelemente liegen an der Oberfläche des Bereiches der Gleitschrägen bzw. an der Oberfläche des Rantstellenbereiches. Diese Randflächen bilden mit den benachbarten Kunststoff-Randflächen eine glatte Fläche.

Diese Randflächen können auch mit einer dünnen Kunststoffauflage versehen sein. Die Schichtdicke muß - falls entsprechende hitzebezogene Produktanforderungen vorliegen- so bemessen sein, daß nach hitzebedingten Fortfall des Kunststoffs die Gleit- und Schwenkfunktion des Schwenkverschluß-Riegels nicht beeinträchtigt ist.

## Patentansprüche

1. Dekompressions-Verschluß-Baueinheit (40),
welche beim Überschreiten eines vorbestimmten Druckes öffnet, mit zwei Dekompressions-Verschlüssen (10;20), welche nebeneinander in versetzt entgegengerichtete Richtungen (+F, +G) wirkend auf einem Basisteil (30) angeordnet sind, wobei die zwei Dekompressions-Verschlüsse (10;20) bestehen aus
a) einem in einem Basisteil (30) längsverschieblichen Lagerschlitten (11;21), auf dem ein Schwenk-Verschlußriegel (12;22) angeordnet ist,
wobei die Verschiebung des Lagerschlittens (11;21) durch die Kraftbeaufschlagung von Gleitschrägen desselben verursacht wird,
b) einer Blattfeder (14;24), deren äußeres Ende den Schwenk-Verschlußriegel (12;22) in Schließstellung hält und bei einem bestimmten Überdruck aus der Schließstellung freigibt und
c) einer den Lagerschlitten (11;21) beaufschlagenden seiner Verschiebung dienenden Feder (31),
wobei der Dekompressions-Verschluß (10;20)aus einer Verschluß-Stellung in eine Nicht- Verschluß-Stellung oder aus einer Nicht-Verschluß-Stellung in eine Verschluß-Stellung bringbar ist und
wobei beim Wechsel beider Stellungen der Lagerschlitten (11;21) gegen die Kraft der seiner Verschiebung dienenden Feder (31) vorübergehend verschiebbar ist,
und
wobei das äußere Ende (12e) des Schwenk-Verschlußriegel (12) des einen Dekompressions-Verschlusses (10) und das äußere Ende (22e) des Schwenk-Verschlußriegel (22) des anderen Dekompressions-Verschlusses (20) versetzt und in entgegengerichtete Richtungen weisend angeordnet sind, **dadurch gekennzeichnet, daß**
daß zwischen den Lagerschlitten (11,21) der zwei Dekompressions-Verschlüsse (10, 20) eine beide in Lagerschlitten-Verschieberichtung beaufschlagende gemeinsame Feder (31) angeordnet ist.

2. Anordnung nach Anspruch 1,
**dadurch gekennzeichnet, daß** die Feder (31) eine Spiral-Druckfeder ist.

3. Anordnung nach Anspruch 1 oder 2,
**dadurch gekennzeichnet, daß**
die Feder (31) zwischen einem an der Lagerschlittenseite des einen Dekompressionsverschlusses (20) angeordneten ersten Vorsprung (23) als Anschlag für ihr erstes Ende (31a) und einem an der Lagerschlittenseite des anderen Dekompressionsverschlusses (10) angeordneten zweiten Vorsprung als Anschlag für ihr zweites Ende (31b) angeordnet ist.

4. Anordnung nach einem der Ansprüche 1 bis 3,
**dadurch gekennzeichnet, daß**
die Feder (31) gegen seitliches Ausweichen gehindert ist
a) durch von ins Innere der Federenden reichende von den Anschlägen ( 23) ausgehende Vorsprünge (23n) und/oder
b) von an den sich gegenüberstehenden Lagerschlittenseiten angeordneten Vorsprüngen und/oder
c) durch ein zwischen den Lagerschlitten angeordnetes FederBett(32).

5. Anordnung nach Anspruch 4,
**dadurch gekennzeichnet, daß**
das Federbett (32) eine rillenartige Vertiefung aufweist.

6. Anordnung nach einem der Ansprüche 1 bis 2, **dadurch**
**gekennzeichnet,**
**daß** das Basisteil und/oder der Lagerschlitten aus Kunststoff ,vorzugsweise aus Polyetheretherketone PEEK, oder aus Metall, vorzugsweise aus Aluminium-Druckguß, hergestellt ist.

7. Anordnung nach Anspruch 1,
**dadurch gekennzeichnet, daß**
beide Lagerschlitten (11,22; 3') zweiteilig (3-1', 3-2') sind.

8. Anordnung nach Anspruch 7,
**dadurch gekennzeichnet, daß**
beide Lagerschlittentelle (3-1', 3-2') jeweils eine Wand (W1', W2')des Lagerschlitten einschließen und daß mindestens ein Lagerschlittentell Abstandselemente (d1,d2,d3) für die Verbindung beider Lagerschlittenteile aufweist.

9. Anordnung nach Anspruch 8,
**dadurch gekennzeichnet,**
**daß** mindestens zwei Abstandselemente (d1,d2) vorgesehen sind, deren freie Enden (e1,e2) in Ausparungen der Wand (W2') aufnehmbar sind, welche der Wand (W1') gegenüberliegt.

10. Anordnung nach Anspruch 9,
**dadurch gekennzeichnet, daß**
daß das aufnehmbare freie Ende (e1,e2) des Abstandselementes (d1,d2) zum übrigen Teil des Abstandselementes einen Absatz (st1, st2) aufweist, welcher an der Wand (W2') anstößt.

11. Anordnung nach einem der Ansprüche 8 bis 10,
**dadurch gekennzeichnet, daß**
eines der Abstandselenente (d1) zugleich die Achse (A') für den Schwenkverschluß-Riegel (2') bildet.

12. Anordnung nach Anspruch 1
**dadurch gekennzeichnet**,
das der Schwenkverschluß-Riegel (2*) ein mit Kunststoff (PL*) umspritztes Metallskelett (B*) aufweist, welches hitzebeständiger als der Kunststoff ist,
daß das Metallskelett (B*) derart ausgebildet ist, daß es nach hitzebedingter Zerstörung des Kunststoffs die Funktion des Schwenkverschluß-Riegels aufrechterhält bezüglich seiner Schwenkbarkeit um die Achse (A*), der Kraftbeaufschlagbarkeit der Gleitschrägen (S*, T*) und der Blattfeder-bezogenen Rastposition (R*).

13. Anordnung nach Anspruch 12,
**dadurch gekennzeichnet, daß**
das Metallskelett (B*) zwei parallel zueinander angeordnete ebene Wandelemenete (B-1*, B-2*) umfaßt, welche durch einen Steg (ST*) miteinander verbunden sind, und welche aufeinander ausgerichtete Bohrungen (BH1*, BH2*) zur Aufnahme der Schwenkachse aufweisen,
und daß die Randflächen (F1*, F2*, F3*, F4*; F5*, F6') der Wandelemente an oder dicht unter der Oberfläche des Bereiches der Gleitschrägen bzw. an oder dicht unter der Oberfläche des Raststellenbereiches liegen.

## Claims

1. Decompression lock assembly (40) which opens when a certain pre-set pressure is exceeded, with two decompression locks (10;20) which are arranged adjacent to one another to act in offset opposite directions (+F, +G) on a base part (30), where the two decompression locks (10;20) consist of
a) a support carriage (11;21) on which a rotating locking latch (12;22) is arranged and which is longitudinally displaceable in a base part (30), where the displacement of the support carriage (11;21) is achieved by pressure acting on slide bevels of the same,
b) a leaf spring (14;24) whose outer end holds the rotating locking latch (12;22) in the locked position and releases it when a certain excessive pressure is reached, and
c) a spring (31) exerting force on the support carriage (11;21) and causing its displacement,
where the decompression lock (10;20) can be changed from a locked position to an unlocked position or from an unlocked position to a locked position, and
where, during the change in either position, the support carriage (11;21) can be displaced temporarily against the force of the spring (31) causing its displacement, and
where the outer end (12e) of the rotating locking latch (12) of one decompression lock (10) and the outer end (22e) of the rotating locking latch (22) of the other decompression lock (20) are offset and arranged to point in opposite directions, **characterised in**
**that** a common spring (31) is arranged between the support carriages (11,21) of the two decompression locks (10, 20) which exerts pressure on both in the direction of displacement of the support carriages.

2. Arrangement according to claim 1,
**characterised in that** the spring (31) is a spiral compression spring.

3. Arrangement according to claim 1 or claim 2,
**characterised in that** the spring (31) is arranged between a first projection (23) located on the support-carriage side of one of the decompression locks (20) as a stop for its first end (31a), and a second projection located on the support-carriage side of the other decompression lock (10) as a stop for its second end (31b).

4. Arrangement according to any of the claims 1 to 3,
**characterised in that** the spring (31) is prevented from being deflected to the side
a) by projections (23n) extending from the stops (23) into the interior of the spring ends and/or
b) by projections located on the opposite sides of the support carriage and/or
c) by a spring bed (32) located between the support carriages.

5. Arrangement according to claim 4,
**characterised in that** the spring bed (32) has a groove-like cavity.

6. Arrangement according to claim 1 or claim 2,
**characterised in that** the base part and/or the support carriage are made of plastic, preferably of polyetheretherketone PEEK or of metal, preferably of die-cast aluminium.

7. Arrangement according to claim 1,
**characterised in that** both support carriages (11, 22; 3') have two parts (3-1', 3-2').

8. Arrangement according to claim 7,
**characterised in that** both parts (3-1', 3-2') of the support carriage include one wall (W1', W2') of the support carriage and that at least one part of the support carriage has spacer elements (d1, d2, d3) for joining both parts of the support carriage.

9. Arrangement according to claim 8,
**characterised in that** at least two spacer elements (d1, d2) are provided whose free ends (e1, e2) can be fitted into recesses in the wall (W2') which lies opposite the wall (W1').

10. Arrangement according to claim 9,
**characterised in that** the free fitting end (e1, e2) of the spacer element (d1, d2) has a shoulder (st1, st2) with reference to the other part of the spacer element which rests against the wall (W2').

11. Arrangement according to any of the claims 8 to 10, **characterised in that** one of the spacer elements (d1) also forms the axis (A') for the rotating locking latch (2').

12. Arrangement according to claim 1,
**characterised in that** the rotating locking latch (2*) has a metal framework (B*) which is more heat-resistant than the plastic coating (PL*) applied to it by means of spraying, that the metal framework (B*) is formed in such a way that, following the destruction of the plastic by heat, it maintains the function of the rotating locking latch with reference to its rotatability around the axis (A*), the ability of the sliding bevels (S*, T*) to respond to pressure and the engaging position (K*) of the spring.

13. Arrangement according to claim 12,
**characterised in that** the metal framework (B*) comprises two flat wall elements (B-1*, B-2*) parallel to one another which are joined to one another by a bridge (ST*) and which have bores (BH1*, BH2*) aligned with one another to accommodate the rotation axis,
and that the edge surfaces (F1*, F2*, F3*, F4*, F5*, F6*) of the wall elements lie on or immediately beneath the surface of the area of the sliding bevels or on or immediately beneath the surface of the engaging area.

## Revendications

1. Unité modulaire de fermetures de décompression (40) qui s'ouvre lorsqu'une pression prédéterminée est dépassée, comprenant deux fermetures de décompression (10 ; 20) qui, agissant l'une à côté de l'autre dans des directions opposées décalées (+F, +G), sont disposées sur un élément de base (30), les deux fermetures de décompression (10 ; 20) se composant
a) d'un chariot de support (11 ; 21) qui est déplaçable longitudinalement dans un élément de base (30) et sur lequel est disposé un verrou de fermeture pivotant (12 ; 22), le déplacement dudit chariot de support (11 ; 21) étant provoqué par l'application d'une force à des biseaux de glissement de celui-ci,
b) d'un ressort à lame (14 ; 24) dont l'extrémité extérieure maintient ledit verrou de fermeture pivotant (12 ; 22) dans la position de fermeture et libère celui-ci, à une surpression déterminée, de la position de fermeture, et
c) d'un ressort (31) chargeant ledit chariot de support (11 ; 21) et servant au déplacement de celui-ci,
ladite fermeture de décompression (10 ; 20) pouvant être amenée d'une position de fermeture à une position de non fermeture ou d'une position de non fermeture à une position de fermeture et
lors du changement des deux positions, ledit chariot de support (11 ; 21) pouvant être déplacé temporairement à l'encontre de la force du ressort (31) servant à son déplacement,
et
l'extrémité extérieure (12e) du verrou de fermeture pivotant (12) de l'une des fermetures de décompression (10) et l'extrémité extérieure (22e) du verrou de fermeture pivotant (22) de l'autre fermeture de décompression (20) étant décalées et disposées de manière à montrer dans des directions opposées,
**caractérisée par le fait que**
entre lesdits chariots de support (11, 21) des deux fermetures de décompression (10, 20) est disposé un ressort (31) commun qui charge les deux dans la direction de déplacement de chariot de support.

2. Ensemble selon la revendication 1, **caractérisé par le fait que** ledit ressort (31) est un ressort hélicoïdal de pression.

3. Ensemble selon la revendication 1 ou 2, **caractérisé par le fait que** ledit ressort (31) est disposé entre une première projection (23) en tant que butée pour la première extrémité (31 a) de celui-ci, qui est disposée sur le côté du chariot de support de l'une des fermetures de décompression (20), et une deuxième projection en tant que butée pour la deuxième extrémité (31 b) de celui-ci, qui est disposée sur le côté du chariot de support de l'autre fermeture de décompression (10).

4. Ensemble selon l'une quelconque des revendications 1 à 3, **caractérisé par le fait que** ledit ressort (31) est empêché de dévier latéralement
a) par des projections (23n) s'étendant à partir des butées (23) et dans l'intérieur des extrémités de ressort, et/ou
b) par des projections disposées sur les faces de chariot de support situées en regard l'une de l'autre et/ou
c) par un logement de ressort (32) disposé entre les chariots de support.

5. Ensemble selon la revendication 4, **caractérisé par le fait que** ledit logement de ressort (32) présente un creux de type cannelure.

6. Ensemble selon l'une quelconque des revendications 1 à 2, **caractérisé par le fait que** ledit élément de base et/ou le chariot de support est fabriqué en matière plastique, de préférence en polyétheréthercétone PEEK, ou en métal, de préférence en aluminium moulé sous pression.

7. Ensemble selon la revendication 1, **caractérisé par le fait que** les deux chariots de support (11 ; 22 ; 3') se composent de deux parties (3-1', 3-2').

8. Ensemble selon la revendication 7, **caractérisé par le fait que** les deux parties de chariot de support (3-1', 3-2') incluent chacune une paroi (W1', W2') du chariot de support et qu'au moins une partie de chariot de support présente des écarteurs (d1, d2, d3) pour la liaison des deux parties de chariot de support.

9. Ensemble selon la revendication 8, **caractérisé par le fait que** deux écarteurs (d1, d2) au moins sont prévus dont les extrémités libres (e1, e2) peuvent être reçues dans des évidements de la paroi (W2') qui est située en regard de la paroi (W1').

10. Ensemble selon la revendication 9, **caractérisé par le fait que** l'extrémité libre (e1, e2) de l'écarteur (d1, d2), qui peut être reçue, présente un épaulement (st1, st2) par rapport à la partie restante de l'écarteur, qui vient en butée contre la paroi (W2')

11. Ensemble selon l'une quelconque des revendications 8 à 10, **caractérisé par le fait que** l'un des écarteurs (d1) forme en même temps l'axe (A') pour le verrou de fermeture pivotant (2').

12. Ensemble selon la revendication 1, **caractérisé par le fait que** le verrou de fermeture pivotant (2*) présente une ossature métallique (B*) surmoulée de matière plastique (PL*), qui est plus résistante à la chaleur que la matière plastique, que ladite ossature métallique (B*) est réalisée de manière à ce que, après la destruction de la matière plastique due à la chaleur, elle maintienne la fonction du verrou de fermeture pivotant quant à la capacité de pivotement de celui-ci autour de l'axe (A*), à la capacité d'application de force aux biseaux de glissement (S*, T*) et à la position d'arrêt (K*) relative au ressort à lame.

13. Ensemble selon la revendication 12, **caractérisé par le fait que** ladite ossature métallique (B*) comprend deux éléments de paroi (B-1*, B-2*) plans disposés parallèlement l'un à l'autre qui sont reliés entre eux par une entretoise (ST*) et qui présentent des perçages (BH1*, BH2*) alignés de réception de l'axe de pivotement, et que les faces de bord (F1*, F2*, F3*, F4* ; F5*, F6') des éléments de paroi sont situées sur ou tout près au-dessous de la surface de la zone des biseaux de glissement ou bien sur ou tout près au-dessous de la surface de la zone de point d'arrêt.
